(19) Europäisches Patentamt / European Patent Office / Office européen des brevets

(11) **EP 2 883 854 A1**

(12) **EUROPEAN PATENT APPLICATION**
published in accordance with Art. 153(4) EPC

(43) Date of publication:
**17.06.2015 Bulletin 2015/25**

(51) Int Cl.:
***C04B 35/584*** (2006.01)

(21) Application number: **13827569.8**

(86) International application number:
**PCT/JP2013/071840**

(22) Date of filing: **12.08.2013**

(87) International publication number:
**WO 2014/025062 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.08.2012 JP 2012178462**

(71) Applicant: **Kyocera Corporation Kyoto-shi Kyoto 612-8501 (JP)**

(72) Inventors:
• **HIRANO,Yoshinori**
  **Kyoto-shi**
  **Kyoto 612-8501 (JP)**

• **OOTA,Mizuho**
  **Kyoto-shi**
  **Kyoto 612-8501 (JP)**
• **ISHIKAWA,Kazuhiro**
  **Kyoto-shi**
  **Kyoto 612-8501 (JP)**
• **ODA,Takehiro**
  **Kyoto-shi**
  **Kyoto 612-8501 (JP)**

(74) Representative: **Viering, Jentschura & Partner Patent- und Rechtsanwälte Grillparzerstrasse 14 81675 München (DE)**

(54) **SILICON NITRIDE SINTERED COMPACT AND HEAT CONDUCTION MEMBER**

(57)     [Object] To provide a silicon nitride sintered body and a heat conduction member which have high corrosion resistance to an alkali component and high thermal conductivity.

[Solution] The silicon nitride sintered body includes a silicon nitride crystal, and a grain boundary phase including at least any of sodium oxide and potassium oxide. A total amount of the sodium oxide and the potassium oxide is 0.2% by mass or more and 1% by mass or less in terms of $Na_2O$ and $K_2O$ on the basis of the total mass. When this configuration is satisfied, it is possible to attain both high corrosion resistance to alkali and high heat conductivity.

Fig1
(a)
(b)

**Description**

Technical Field

The present invention relates to a silicon nitride sintered body and a heat conduction member.

Background Art

Currently, as an industrial member such as an engine component, a member for molten metal, a cutting tool, a component for a fast reactor, and a member for molten metal, a silicon nitride sintered body has been used.

As an example of the silicon nitride sintered body, for example, PTL 1 discloses a spark plug for an internal-combustion engine which is configured of a sintered body that contains silicon nitride as a main component, 2% by weight to 15% by weight of calcium oxide, 0.01% by weight to 10% by weight of magnesium oxide, and 0% by weight to 15% by weight of aluminum oxide in terms of an oxide.

Citation List

Patent Literature

PTL 1: Japanese Unexamined Patent Application Publication No. 5-36464

Summary of Invention

Technical Problem

However, the sintered body containing silicon nitride as a main component, which is disclosed in PTL 1, has a problem in that the sintered body is corroded when being exposed to a coolant or a cleaning solution which contains an alkali component. In addition, in a case of using a component, which has high corrosion resistance to an alkali metal, as a sintering additive, when an amount of the component is excessive, there is a problem in that thermal conductivity of the silicon nitride sintered body after firing decreases.

The invention has been suggested to solve the above-described problem, and an object thereof is to provide a silicon nitride sintered body and a heat conduction member which have high corrosion resistance to an alkali component and high thermal conductivity.

Solution to Problem

According to an aspect of the invention, there is provided a silicon nitride sintered body including a silicon nitride crystal, and a grain boundary phase including at least any of sodium oxide and potassium oxide. A total amount of the sodium oxide and the potassium oxide is 0.2% by mass or more and 1% by mass or less in terms of $Na_2O$ and $K_2O$ on the basis of the total mass.

According to another aspect of the invention, there is provided a heat conduction member including: a silicon nitride sintered body in which magnesium oxide is included in the grain boundary phase, a first region in which a characteristic X-ray intensity of magnesium is relatively large and a second region in which the characteristic X-ray intensity of magnesium is relatively small are provided, and at least the first region is exposed; and a heat source. The heat source is disposed on the first region side. Advantageous Effects of Invention

According to the silicon nitride sintered body of the invention, it is possible to attain both high corrosion resistance to an alkali component and high thermal conductivity.

In addition, according to the heat conduction member of the invention, it is possible to attain high reliability with respect to corrosion resistance to an alkali component and it is possible to efficiently transmit heat of a heat source.

Brief Description of Drawings

Fig. 1 is a view illustrating an example of a structure configured of a silicon nitride sintered body of an embodiment, in which (a) is a longitudinal cross-sectional view, and (b) is an enlarged view of a cross-section taken along line X-X' in (a).
Fig. 2 is a longitudinal cross-sectional view illustrating an example of a heat conduction device including the heat conduction member of another embodiment.

Description of Embodiments

A silicon nitride sintered body of this embodiment includes a silicon nitride crystal, and a grain boundary phase including at least any of sodium oxide and potassium oxide. A total amount of the sodium oxide and the potassium oxide is 0.2% by mass or more and 1% by mass or less in terms of $Na_2O$ and $K_2O$ on the basis of the total mass.

Here, for example, the existence of the silicon nitride crystal can be confirmed by performing measurement and identification with an X-Ray Diffraction device (XRD). In addition, inevitable impurities may be included in the silicon nitride crystal. In addition, the grain boundary phase represents a region other than the silicon nitride crystal, and crystals other than the silicon nitride crystal or an amorphous phase exist in the grain boundary phase.

In addition, the existence of sodium oxide or potassium oxide can be confirmed in the following cases. For example, in a case of the sodium oxide, when Na and oxygen (O) are included in elements detected by spectrally separating energy of characteristic X-rays generated by electron beams used for irradiation of the grain boundary phase in analysis using an Energy Dispersive X-ray analyzer (EDX), the existence of the sodium oxide is confirmed. In addition, when an existing position of Na and an existing position of O overlap each other by confirmation of mapping using an Electron Probe MicroAnalyzer (EPMA), the existence of the sodium oxide is confirmed.

In addition, the total mass represents the total mass (amount) of the entirety of components that constitute the silicon nitride sintered body, and the total mass is 100% by mass.

When the total amount of the sodium oxide and the potassium oxide is 0.2% by mass or more in terms of $Na_2O$ and $K_2O$ on the basis of the total mass, the sodium oxide or the potassium oxide is less likely to react with an alkali component, and thus corrosion resistance of the silicon nitride sintered body to an alkali component increases.

In addition, when the total amount of the sodium oxide and the potassium oxide is 1% by mass or less in terms of $Na_2O$ and $K_2O$ on the basis of the total mass, it is possible to reduce the number of pores, which exist in the silicon nitride sintered body after sintering, due to vaporization of the sodium oxide and the potassium oxide during a firing process of the silicon nitride sintered body. Accordingly, a decrease in thermal conductivity of the silicon nitride sintered body is small, and thus the thermal conductivity of the silicon nitride sintered body is retained to be high.

As described above, when the total amount of the sodium oxide and the potassium oxide is 0.2% by mass or more and 1% by mass or less in terms of $Na_2O$ and $K_2O$ on the basis of the total mass in the silicon nitride sintered body, it is possible to attain both of the high corrosion resistance to an alkali component and the high thermal conductivity.

In addition, in the silicon nitride sintered body of this embodiment, when the amount of silicon nitride is 80% by mass or more in terms of $Si_3N_4$ on the basis of the total mass, and particularly, 85% by mass or more, the thermal conductivity and mechanical strength tend to increase, and thus this range is preferable.

In addition, the amount of the silicon nitride in terms of $Si_3N_4$ can be calculated by measuring an amount of nitrogen in the silicon nitride sintered body with a nitrogen analyzer and converting the amount of nitrogen into an amount of $Si_3N_4$. In addition, the amount of the sodium oxide in terms of $Na_2O$ and the amount of the potassium oxide in terms of $K_2O$ can be obtained by obtaining an amount of Na and an amount of K by using a fluorescent X-ray analyzer or an Inductively Coupled Plasma (ICP) emission spectrophotometer and then converting the amount of Na and the amount of K into an amount of $Na_2O$ and an amount of $K_2O$, respectively.

In addition, in the silicon nitride sintered body of this embodiment, it is preferable that calcium oxide be included in the grain boundary phase, and an amount of the calcium oxide be 2.2% by mass or more and 5.2% by mass or less in terms of CaO on the basis of the total mass. When the amount of the calcium oxide is in the above-described range, crystal densification of silicon nitride is promoted by the calcium oxide, and thus mechanical strength increases. Accordingly, it is possible to increase the mechanical strength of the silicon nitride sintered body. In addition, an occupancy ratio by the grain boundary phase including the calcium oxide is not too high, and thus it is possible to retain thermal conductivity of the silicon nitride sintered body at a high value.

In addition, in the silicon nitride sintered body of this embodiment, it is preferable that magnesium oxide be included in the grain boundary phase, and an amount of the magnesium oxide be 0.1% by mass or more and 0.6% by mass or less in terms of MgO on the basis of the total mass. When the amount of the magnesium oxide is in the above-described range, the magnesium oxide is included in the grain boundary phase, and thus it is possible to increase fracture toughness of the silicon nitride sintered body. In addition, crystal densification of silicon nitride and crystallization of crystals other than silicon nitride in the grain boundary phase are promoted during firing, and thus it is possible to increase the mechanical strength of the silicon nitride sintered body. In addition, it is possible to suppress scattering of phonons, and thus it is possible to retain the thermal conductivity of the silicon nitride sintered body at a high value. In addition, when the amount of the magnesium oxide having a redox potential that is large on a negative side is set to the above-described range, it is possible to retain oxidation resistance of the silicon nitride sintered body.

In addition, in the silicon nitride sintered body of this embodiment, it is preferable that aluminum oxide be included in the grain boundary phase, and an amount of the aluminum oxide be 5.3% by mass or more and 8.6% by mass or less in terms of $Al_2O_3$ on the basis of the total mass. When the amount of the aluminum oxide is in the above-described range, the aluminum oxide is included in the grain boundary phase, and thus it is possible to increase fracture toughness of the silicon nitride sintered body. In addition, crystal densification of silicon nitride is promoted and abnormal grain growth is suppressed, and thus it is possible to increase the mechanical strength of the silicon nitride sintered body. In addition, the amount of the aluminum oxide is not set to an amount at which sialon having thermal conductivity lower than that of silicon nitride tends to be formed, and thus it is possible to retain thermal conductivity of the silicon nitride sintered body at a high value.

In addition, as is the case with confirmation of the above-described sodium oxide, the existence of the calcium oxide, the magnesium oxide, and the aluminum oxide in the grain boundary phase can be confirmed by using EDX or EPMA. In addition, with regard to amounts of the oxides, measurement and calculation may be performed as described above by using the fluorescent X-ray analyzer or the ICP emission spectrophotometer.

In addition, in the silicon nitride sintered body of this embodiment, it is preferable that gehlenite be included in the grain boundary phase. When the gehlenite is included in the grain boundary phase, an occupancy ratio by an amorphous phase in the grain boundary phase can be decreased, and thus it is possible to increase the rigidity of the silicon nitride sintered body. In addition, a compositional formula of the gehlenite can be expressed, for example, by $Ca_2Al_2SiO_7$, but there is no limitation to the stoichiometric composition.

In addition, in the silicon nitride sintered body of this embodiment, it is preferable that magnesium and sodium form a solid-solution in the gehlenite. When an amount of magnesium and an amount of sodium in the silicon nitride sintered body are the same as each other, if magnesium and sodium form a solid-solution in the gehlenite, an existing ratio of a crystal (gehlenite) in the grain boundary phase increases, and thus an existing ratio of an amorphous phase decreases. Accordingly, deformation of the grain boundary phase is suppressed, and thus it is possible to increase the rigidity of the silicon nitride sintered body.

In addition, a compositional formula of the gehlenite in which magnesium and sodium form a solid-solution can be expressed, for example, by $((Ca_{1-(a+b)}, Na_a, Mg_b)_2 (Al_{1-(c+d)}, Si_c, Mg_d)_2(Si_{1-(e+f)}, Al_e, Mgf) O_7)$ (provided that, $0<a+b<1$, $0<c+d<1$, and $0<e+f<1$) .

In addition, the existence of the gehlenite in the grain boundary phase of the silicon nitride sintered body can be confirmed by performing measurement and identification by using XRD. In addition, with regard to whether or not magnesium and sodium form a solid-solution in the gehlenite, when confirming elements included in the gehlenite by using a Transmission Electron Microscope (TEM) provided with an Energy Dispersive X-ray Spectrometer (EDS) or a Wavelength Dispersive X-ray Spectrometer (WDS), if magnesium and sodium are included, it is regarded that magnesium and sodium form a solid-solution in the gehlenite.

In addition, in the silicon nitride sintered body of this embodiment, it is preferable that first compounds, which include iron and silicon, scatter in a surface layer, and the number of the first compounds having an equivalent circle diameter of 0.05 $\mu$m or more and 5 $\mu$m or less be $2.0\times10^4$ pieces or more and $2.0\times10^5$ pieces or less per 1 $mm^2$. In addition, the surface layer in this embodiment represents a portion ranging from a surface of the silicon nitride sintered body to a depth of less than 1 mm. When this configuration is satisfied, the first compounds, which include iron and silicon, are thermodynamically stable, and thus it is possible to improve thermal shock resistance of the silicon nitride sintered body. In addition, even when the first compounds are oxidized and discolored, it is possible to suppress discoloration of the silicon nitride sintered body itself.

Here, each of the first compounds which include iron and silicon represents a compound (for example, $FeSi_3$, $FeSi_2$, and the like) which is configured of iron and silicon, or a compound which is configured of iron, silicon, and at least any element selected from oxygen, aluminum, magnesium, calcium, sodium, and potassium.

In addition, in the silicon nitride sintered body of this embodiment, it is preferable that second compounds, which include tungsten and silicon, scatter in a surface layer, and the number of the second compounds having an equivalent circle diameter of 0.05 $\mu$m or more and 5 $\mu$m or less be $2.0\times10^4$ pieces or more and $2.0\times10^5$ pieces or less per 1 $mm^2$. When the above-described configuration is satisfied, a blackening tendency of a surface of the silicon nitride sintered body becomes strong, and thus color unevenness is less likely to occur on the surface. In addition, even when mechanical stress is applied to the surface, it is possible to suppress an occurrence of a crack.

Here, each of the second compounds which include tungsten and silicon represents a compound (for example, $W_5Si_3$, $W_3Si_2$, and the like) configured of tungsten and silicon, or a compound which is configured of tungsten, silicon, and at least any element selected from oxygen, aluminum, magnesium, calcium, sodium, and potassium.

In addition, with regard to whether or not the first compound which includes iron and silicon in the surface layer or the second compound which includes tungsten and silicon scatter in the surface layer, in a case of the first compound that includes iron and silicon, it is possible to confirm the scattering in accordance with whether or not a plurality of sites, at which an existing position of Fe and an existing position of Si overlap each other, are present. In addition, in a case of the second compound which includes tungsten and silicon, it is possible to confirm the scattering in accordance with whether or not a plurality of sites, at which an existing position of W and an existing position of Si overlap each other, are present. In addition, with regard to identification of each compound, measurement and identification can be performed with XRD.

In addition, the number of the first compounds, which include iron and silicon and have an equivalent circle diameter of 0.05 $\mu$m or more and 5 $\mu$m or less, per 1 mm$^2$, and the number of the second compounds, which include tungsten and silicon and have an equivalent circle diameter of 0.05 $\mu$m or more and 5 $\mu$m or less, per 1 mm$^2$ may be analyzed as follows. A magnification is set to 1000 times by using a scanning electron microscope to set a range in order for an area to be, for example, 10.8×10$^4$ $\mu$m$^2$ (a length in a horizontal direction is 127 $\mu$m, and a length in a vertical direction is 85.3 $\mu$m), a reflected electron image in this range is captured by using a CCD camera, and a particle analysis method is performed by using image analysis software "azokun" (registered trade mark, manufactured by Asahi Kasei Engineering Corporation).

Here, with regard to setting conditions of the method, brightness may be set to "light", a binarization method may be set to "manual", and a threshold value that is an index indicating light and darkness of the reflected electron image may be set, for example, to 1.5 times to 1.8 times the peak value of a histogram indicating brightness of each point (each pixel) in the reflected electron image. In addition, in a case where both of the first compound that includes iron and silicon and the second compound that includes tungsten and silicon exist, the threshold value may be appropriately set to a threshold value at which the respective compounds can be distinguished by a color tone. In addition, an optical microscope may be used instead of the scanning electron microscope.

In addition, in the silicon nitride sintered body of this embodiment, it is preferable that magnesium aluminate be included in the grain boundary phase. When the magnesium aluminate is included in the grain boundary phase, since the magnesium aluminate has higher corrosion resistance to an alkali compound in comparison to the silicon nitride, it is possible to further increase the corrosion resistance to an alkali component.

In addition, in the silicon nitride sintered body of this embodiment, it is preferable that an amount of a rare-earth metal be small so as to increase corrosion resistance to not only an alkali component but also an acid component, and the amount of the rare-earth metal be preferably 0.1% by mass or less.

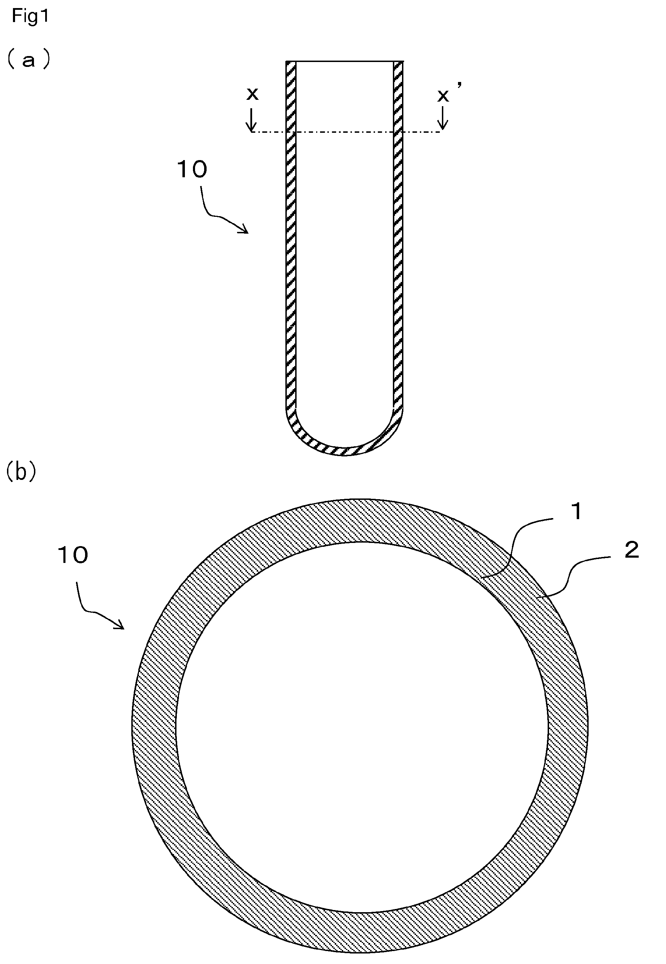

Fig. 1 illustrates an example of a structure configured of the silicon nitride sintered body of an embodiment, in which (a) is a longitudinal cross-sectional view, and (b) is an enlarged view of a cross-section taken along line X-X' in (a).

The structure 10 configured of the silicon nitride sintered body, which is illustrated in Fig. 1, is a bottomed tubular body. For example, the structure 10 is used to conduct heat of a heat source disposed inside the tubular body to the outside of the tubular body, or to conduct heat of a heat source disposed outside the tubular body to the inside of the tubular body. In this structure, the silicon nitride sintered body includes a silicon nitride crystal, and a grain boundary phase including at least any of sodium oxide and potassium oxide. A total amount of the sodium oxide and the potassium oxide is 0.2% by mass or more and 1% by mass or less in terms of Na$_2$O and K$_2$O on the basis of the total mass. The silicon nitride sintered body further includes magnesium oxide in the grain boundary phase. A first region 1 in which a characteristic X-ray intensity of magnesium is relatively large and a second region 2 in which the characteristic X-ray intensity of magnesium is relatively small are provided, and the first region 1 is positioned on a heat source side. That is, it is preferable that the first region 1 be exposed. In addition, Fig. 1 illustrates an example in which an inner peripheral surface side of the tubular body is set as the first region 1, and an outer peripheral surface side is set as the second region 2.

When the structure 10 illustrated in Fig. 1 is configured of the silicon nitride sintered body satisfying the above described configuration, a density in the first region 1 is higher than a density in the second region 2. Accordingly, the first region 1 can effectively receive heat from the heat source, and can conduct the heat to the outside through the second region 2.

In addition, comparison of the values of characteristic X-ray intensity of magnesium is performed as follows. For example, confirmation of a portion distant from a surface (an inner periphery in Fig. 1) on one side of a cross-section of the structure 10 illustrated in (b) of Fig. 1 by 20% of a depth in a thickness direction, and a portion distant from a surface (an outer periphery in Fig. 1) on the other side of the cross-section by 20% of a depth in a thickness direction is performed through magnesium color mapping using EPMA. At that time, in the color mapping, when a characteristic X-ray intensity is small, a cool color system is shown, and when the characteristic X-ray intensity is large, a warm color system is shown. That is, the first region 1 is shown with a color tone on a warmer color system side in comparison to the second region 2, and the second region 2 is shown with a color tone on a cooler color system side in comparison to the first region 1.

In addition, in the silicon nitride sintered body of this embodiment, it is preferable that the number of pores per unit area in the first region 1 be smaller than that in the second region 2. In this configuration, the density of the first region 1 further increases. Accordingly, the silicon nitride sintered body can efficiently receive heat from the heat source and can conduct the heat.

In addition, with regard to the number of pores in the first region 1 and the number of pores in the second region 2, the number of pores per unit area may be obtained in each of the regions in the cross-section. For example, a cross-section is polished, a magnification is set to 200 times by using an optical microscope, and the cross-section is photographed with a CCD camera. The number of pores per unit area is counted by using an image analyzer (LUZEX series, manufactured by NIRECO CORPORATION) in a state in which a measurement area of one visual field in an image is set to $2.25 \times 10^{-2}$ mm$^2$, and the number of measurement visual fields is set to 20, that is, a total measurement area is set to $4.5 \times 10^{-1}$ mm$^2$. Then, the number of pores in the first region 1 and the number of pores in the second region 2 are compared with each other.

In addition, with regard to another example of the structure configured of the silicon nitride sintered body, in addition to the configuration of the structure 10 illustrated in Fig. 1, aluminum oxide is further included in the grain boundary phase, the second region 2 includes a third region in which a characteristic X-ray intensity of aluminum is relatively large and a fourth region in which the characteristic X-ray intensity of aluminum is relatively small, and the third region is preferably exposed. When this configuration is satisfied, the mechanical strength of the third region increases. Accordingly, it is possible to reduce breakage caused by impact due to contact and the like during handling, and it is possible to increase corrosion resistance to an alkali component or an aluminum molten metal.

Here, the third region and the fourth region can be confirmed by the following method. After confirmation of the first region 1 and the second region 2 through magnesium color mapping using EPMA as described above, with respect to the second region 2, aluminum color mapping using EPMA is observed. Specifically, in (b) of Fig. 1, color tones on an inner side and on an outer side of a portion distant from the outer peripheral surface by 20% of a depth in a thickness direction are confirmed. At that time, a region that is shown with a color tone on a relatively warm color system side is the third region, and a region that is shown with a color tone on a relatively cool color system side is the fourth region.

In addition, in Fig. 1, the bottomed tubular body in which an end on one side is sealed is illustrated. However, there is no limitation to the shape, and the shape may be a tubular shape (also including an annular shape such as a ring) in which both ends are not sealed, a casing shape, and the like.

Examples of specific use of the structure 10 configured of the silicon nitride sintered body of this embodiment include a burner tube, a radiant tube, a protective tube for a thermocouple, a ladle, a stoke, a rotor for degassing, a sealing, a firing container, a spherical or roller-shaped rolling body, and the like.

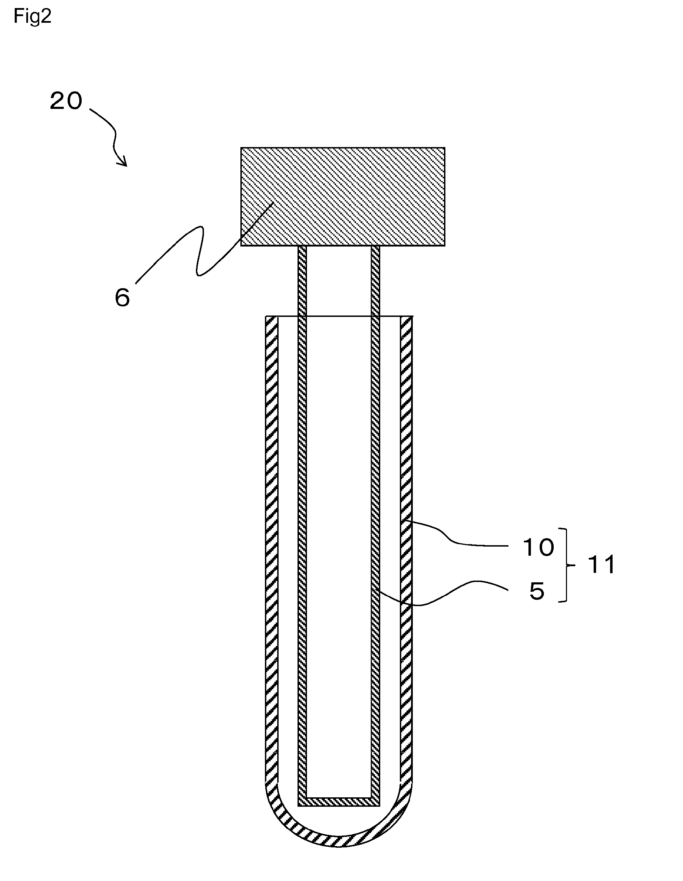

Fig. 2 is a longitudinal cross-sectional view illustrating an example of a heat conduction device provided with the heat conduction member of an embodiment.

A heat conduction device 20 illustrated in Fig. 2 is used to heat a molten metal such as aluminum, and includes a heat conduction member 11 that is a structure 10 including a heater 5 that is a heat source and a silicon nitride sintered body that surrounds and protects the heater 5, and a power supply 6 that supplies power to the heater 5. In addition, the structure 10 satisfies the configuration described in Fig. 1. In the structure 10 having a configuration illustrated in Fig. 2, an inner peripheral surface is configured of a first region, that is, the heat source is disposed on a first region side of the structure 10.

In the heat conduction device 20, at least a part of the structure 10 in the heat conduction member 11 is disposed to be immersed in a molten metal (not shown), the heater 5 is heated by power supplied from the power supply 6, and the molten metal is heated through the structure 10. In addition, in the heat conduction member 11, since the heat source is disposed on the first region side, heat emitted from the heater 5 can be efficiently conducted to the molten metal. In addition, it is needless to say that the heat conduction member 11 can be used to heat something other than the molten metal. In addition, an example of the heat conduction member 11 that uses the structure 10 is illustrated in Fig. 2, but a structure having a configuration including aluminum in the grain boundary phase may be used.

Next, a method of manufacturing the silicon nitride sintered body of this embodiment will be described.

First, a metal silicon powder, and a silicon nitride powder in which a β-phase formation rate is 20% or less are prepared, and the powders are mixed in such a manner that a mass ratio of (metal silicon powder)/(silicon nitride powder) becomes 1 or more and 10 or less, thereby obtaining a first powder. Here, there is a concern that nitrification deficiency and sintering deficiency may be caused depending on a particle size of the metal silicon powder. Accordingly, when the total cumulative volume of a particle size distribution curve is set to 100%, a powder in which a particle size ($D_{90}$), of which the cumulative volume becomes 90%, is 10 $\mu$m or less and preferably 6 $\mu$m or less is used as the metal silicon powder.

In addition, as the sintering additive, a second powder is obtained by weighing a powder of at least any of sodium oxide and potassium oxide, a magnesium aluminate powder, and a metal compound powder.

The first powder and the second powder are weighed in such a manner that the second powder becomes 10% by mass or more and 23% by mass or less when the total mass of the first powder and the second powder is set to 100% by mass, and the weighed powders are set as starting raw materials. In addition, examples of the metal compound include aluminum oxide, silicon dioxide, calcium carbonate, and the like. In addition, powders of magnesium hydroxide, magnesium oxide, magnesium carbonate, and the like may be used instead of the magnesium aluminate powder.

Here, when it is desired to obtain the silicon nitride sintered body which includes a silicon nitride crystal, and a grain boundary phase including at least any of sodium oxide and potassium oxide, and in which a total amount of the sodium oxide and the potassium oxide is 0.2% by mass or more and 1% by mass or less in terms of $Na_2O$ and $K_2O$ on the basis of the total mass, a powder of the sodium oxide and/or a powder of the potassium oxide may be weighed in consideration of an increase in a mass due to nitrification of a metal silicon powder and evaporation during a firing process.

In addition, in the manufacturing method described here, nitrification is allowed to occur by using the metal silicon powder to generate silicon nitride, and an increase in mass due to nitrification of metal silicon occurs. Accordingly, for example, when a magnesium oxide powder is added as a starting raw material, and thus when magnesium oxide exists in the silicon nitride sintered body, the mass of the magnesium oxide in 100% by mass of starting raw material and the mass of magnesium oxide in the total mass of the silicon nitride sintered body are not equal to each other. Therefore, weighing of the magnesium aluminate powder and the metal compound powder is also performed in consideration of an increase in mass due to nitrification of metal silicon.

Next, the starting raw materials are mixed and pulverized with a solvent in accordance with a known method, for example, by using a barrel mill, a rotary mill, a vibration mill, a bead mill, a sand mill, an agitator mill, and the like to obtain a slurry. As a pulverization medium that is used in the pulverization, a medium configured of a silicon nitride sintered body, a zirconium oxide sintered body, an aluminum oxide sintered body, and the like may be used. However, to reduce an effect due to deviation from a target composition, it is preferable to use a pulverization medium configured of a silicon nitride sintered body having the same material composition or an approximate composition as that of a silicon nitride sintered body to be manufactured.

In addition, it is preferable that the pulverization be performed until the particle size ($D_{90}$) reaches 3 $\mu$m or less from the viewpoint of an improvement in sinterability. In addition, an outer diameter and an amount of the pulverization medium, a pulverization time, and the like may be adjusted to obtain a desired particle size distribution. To perform the pulverization in a short time, as a powder that constitutes the second powder, it is preferable to use a powder having a particle size ($D_{50}$) of 1 $\mu$m or less of which a cumulative volume becomes 50%.

In addition, an organic binder such as paraffin wax, polyvinyl alcohol (PVA), and polyethylene glycol (PEG) is appropriately selected in accordance with a molding method, is weighed in an amount of 1 part by mass or more and 10 parts by mass or less on the basis of 100 parts by mass of starting raw materials, and is mixed to a slurry to improve moldability. In addition, a thickening stabilizer, a dispersant, a pH adjusting agent, a defoaming agent, and the like may be added.

Here, when it is desired to obtain a silicon nitride sintered body in which first compounds including iron and silicon scatter in a surface layer, and the number of the first compounds having an equivalent circle diameter of 0.05 $\mu$m or more and 5 $\mu$m or less is $2.0 \times 10^4$ pieces or more and $2.0 \times 10^5$ pieces or less per 1 mm$^2$, a ferric oxide powder having a specific surface area of 0.5 m$^2$/g or more and 50 m$^2$/g or less is added to and mixed with the slurry. In addition, with regard to an added amount of the ferric oxide powder, weighing is performed in such a manner that the ferric oxide powder becomes 1 part by mass or more and 1.7 parts by mass or less on the basis of 100 parts by mass of the starting raw material.

In addition, when it is desired to obtain a silicon nitride sintered body in which second compounds including tungsten and silicon scatter in the surface layer, and the number of the second compounds having an equivalent circle diameter of 0.05 $\mu$m or more and 5 $\mu$m or less is $2.0 \times 10^4$ pieces or more and $2.0 \times 10^5$ pieces or less per 1 mm$^2$, a tungsten oxide powder having a specific surface area of 0.5 m$^2$/g or more and 50 m$^2$/g or less is added to and mixed with the slurry. In addition, with regard to an added amount of the tungsten oxide powder, weighing is performed in such a manner that the tungsten oxide powder becomes 0.6% by mass or more and 0.9% by mass or less on the basis of 100 parts by mass of the starting raw material.

Next, the slurry is allowed to pass through a sieve, and a granule that is granulated by using a spraying and drying device is obtained. Then, a molded body which has a relative density of 45% to 60% and a desired shape is obtained by using the obtained granule through press molding, Cold Isostatic Pressing (CIP) molding, and the like. In addition, a molded body may be prepared by using a molding method other than the press molding and the CIP molding.

Hereinafter, description will be made with respect to a molded body that is molded into a shape of the structure 10 illustrated in Fig. 1.

The molded body is placed in a carbon sagger of which a surface is covered with crystalline particles of silicon carbide or silicon nitride, and degreasing is performed in a nitrogen atmosphere or in vacuo. A degreasing temperature is different depending on a kind of the organic binder that is added, but it is preferable that the degreasing temperature be 900°C or lower, and more preferably 450°C or higher and 800°C or lower. In addition, a body obtained by removing a fat component such as the organic binder from the molded body is referred to as a degreased body.

Next, a temperature is further raised from the degreasing temperature, and then nitrification is performed in a nitrogen atmosphere. In addition, it is preferable to perform the nitrification by a second nitrification process in which a temperature is set to be higher than a temperature during a first nitrification process after the first nitrification process.

Specifically, in the first nitrification process, a nitrogen partial pressure is set to 10 kPa to 200 kPa, and retention is performed at a temperature of 1000°C to 1200°C for 15 hours to 25 hours to nitrify 10% by mass to 70% by mass of metal silicon in the degreased body. Next, in the second nitrification process, retention is performed at a temperature from the temperature during the first nitrification process to 1400°C for 5 hours to 15 hours to nitrify the remainder of the metal silicon in the degreased body, thereby obtaining a nitrified body. Here, the temperature during the second nitrification process is higher than the temperature during the first nitrification process, and is equal to or lower than 1400°C, and it is preferable that the first nitrification process and the second nitrification process be continuously performed.

In addition, after the second nitrification process, a temperature is continuously raised to set a firing temperature to 1700°C or higher and 1860°C or lower, and a pressure of nitrogen is set, for example, to 100 kPa or higher and 160 kPa or lower, and then retention is performed for 6 hours to 14 hours. Then, cooling is performed at a cooling rate of 170°C/hour or higher and lower than 230°C/hour. In addition, when it is desired to obtain a silicon nitride sintered body that includes gehlenite in the grain boundary phase, the cooling may be performed at a cooling rate of 190°C/hour or higher and lower than 210°C/hour.

In addition, when it is desired to obtain a silicon nitride sintered body in which magnesium and sodium form a solid-solution in gehlenite, the cooling may be performed at a cooling rate of 170°C/hour or higher and lower than 190°C/hour.

In addition, when it is desired to obtain the structure 10 (silicon nitride sintered body) in which magnesium oxide is included in the grain boundary phase, a first region in which the characteristic X-ray intensity of magnesium is relatively large, and a second region in which the characteristic X-ray intensity of magnesium is relatively small are provided, and at least the first region is exposed, for example, a gas supply tube is disposed on an inner peripheral surface side of the molded body, and the nitrification process is performed while supplying nitrogen so as to suppress vaporization of magnesium oxide from an inner peripheral surface side during placement of the molded body on the sagger. In addition, a temperature is continuously raised to perform firing.

Here, when it is desired to obtain the structure 10 in which the number of pores per unit area in the first region is smaller than that in the second region, in a case where an inner peripheral surface side is the first region and an outer peripheral surface side is the second region, a metal silicon (Si) powder and a silicon dioxide ($SiO_2$) powder are mixed in a molar ratio of $Si:SiO_2$=0.6 to 1.4:1 in order for heat capacity on an inner peripheral surface side to increase, a porous firing container is filled with the resultant mixture, and the porous firing container may be disposed on an inner peripheral surface side of the molded body.

In addition, when it is desired to obtain a structure in which aluminum oxide is included in the grain boundary phase, the second region includes a third region in which the characteristic X-ray intensity of aluminum is relatively large, and a fourth region in which the characteristic X-ray intensity of aluminum is relatively small, and the third region is exposed, for example, in a case where the third region is exposed to the outer peripheral side, as an atmosphere adjusting agent, a powder configured of at least any of aluminum oxide and aluminum nitride may be spread at a position on an outer side so as not to come into contact with a molded body on a bottom plate of a sagger. Alternatively, a slurry is prepared by mixing a powder configured of at least any of aluminum oxide and aluminum nitride and water, and the slurry is applied onto a side wall of the sagger and is dried. Then, the resultant sagger may be used.

Here, with regard to a particle size of the atmosphere adjusting agent, it is preferable to use a powder in which a particle size defined in JIS R 6001-1998 is, for example, F16 to F220 when considering that handling is easy and high reactivity is obtained with a high specific surface area.

In addition, the silicon nitride sintered body obtained in accordance with the above-described manufacturing method may be subjected to processing such as polishing, a blast treatment, cutting, and drilling as necessary.

Hereinafter, examples of the invention will be described in detail, but the invention is not limited to the examples.

EXAMPLE 1

First, a metal silicon powder and a silicon nitride powder in which a β-phase formation rate is 10% (an α-phase formation rate is 90%) were prepared, and the powders were weighed in such a manner that a mass ratio of (metal silicon powder)/(silicon nitride powder) became 5.4. Then, the weighed powders were mixed with each other to obtain the first powder. Here, as the metal silicon powder, a powder having a particle size ($D_{90}$) of 5 μm was used.

Next, as the second powder, respective powders were weighed as shown in Table 1. In addition, weighing was performed in such a manner that the total of the second powders became a mass illustrated in Table 1, and the remainder became the first powder. These materials were set as starting raw materials. Next, the starting raw materials, water, and a pulverization medium configured of a silicon nitride sintered body were put into a barrel mill, and the starting raw materials were mixed and pulverized until the particle size ($D_{90}$) reached 1 μm or less, thereby obtaining a slurry.

Then, 5 parts by mass of polyvinyl alcohol (PVA) was weighed on the basis of 100 parts by mass of the starting raw materials, and was added to and mixed with the slurry. Then, the slurry was allowed to pass through a sieve, and a granule that was granulated by using a spraying and drying device was obtained.

Next, the obtained granule was CIP molded, and cutting was performed to obtain a bottomed tubular molded body having post-firing dimensions of an outer diameter of 150 mm, an inner diameter of 130 mm, and a length of 1000 mm.

Then, the molded body was placed in a sagger configured of a silicon carbide sintered body, and the molded body was retained in a nitrogen atmosphere at 500°C for 5 hours to perform degreasing. Subsequently, a temperature was further raised, and the molded body was sequentially retained at 1050°C for 20 hours, and at 1250°C for 10 hours. The sequential retention was performed at a nitrogen partial pressure of 150 kPa in a substantially nitrogen atmosphere. Then, the temperature was further raised, a nitrogen pressure was set to 100 kPa, and the molded body was retained at a nitrogen pressure of 100 kPa at 1730°C for 12 hours to perform firing. Then, cooling was performed at a cooling rate of 180°C/hour, thereby obtaining silicon nitride sintered body of Nos. 1 to 38.

Then, confirmation of mapping by using EPMA was performed with respect to the respective samples, and it was confirmed that an existence position of each of sodium, potassium, calcium, magnesium, and aluminum and an existence position of oxygen overlapped each other. Amounts of Na, K, Ca, Mg, and Al were obtained by using an ICP emission spectrophotometer, and values in terms of $Na_2O$, $K_2O$, $CaO$, $MgO$, $Al_2O_3$ are shown in Table 2.

In addition, from measurement and identification with XRD with respect to the respective samples, it could be seen that a silicon nitride crystal was included. In addition, with regard to an amount of silicon that was included in Sample Nos. 1 to 38, an amount of silicon in the silicon nitride sintered body was measured by a nitrogen analyzer, and the amount of silicon nitride in terms of $Si_3N_4$ was 80% by mass or more in all samples.

In addition, a mass after immersing each of the samples in 30% by mass sodium hydroxide solution adjusted to 90°C for 100 hours, and a mass before the immersion were compared with each other. From the comparison, a decrement in mass per unit area is shown in Table 2.

In addition, thermal diffusivity $\alpha$ in a thickness direction of each sample was measured by using a thermal constant measuring device (TC-7000, manufactured by ULVAC-RIKO, Inc.) in accordance with a two-dimensional method using a laser flash. In addition, specific heat capacity C of each sample was measured by using a supersensitive differential scanning calorimeter (DSC-6200, manufactured by Seiko Instruments Inc.) in accordance with a differential scanning calorimetry method (DSC method). In addition, an apparent density p ($kg/m^3$) of each sample was measured in accordance with JIS R 1634-1998. In addition, the resultant values obtained by the above-described methods were substituted for the following Expression (1) to calculate thermal conductivity k ($W/(m \cdot K)$) in a thickness direction of each sample, and calculated values are shown in Table 2.

$$k = \alpha \cdot C \cdot \rho \quad \cdots \quad (1)$$

In addition, with regard to mechanical strength of the respective samples, four-point bending strength was measured in accordance with JIS R 1601-2008, and measured values are shown in Table 2.

[Table 1]

| Sample No. | First mixed powder | Second mixed powder | | | | | |
|---|---|---|---|---|---|---|---|
| | | Sodium oxide | Potassium oxide | Calcium carbonate | Magnesium aluminate | Aluminum oxide | Total amount |
| | %by mass | %by mass | %by mass | %by mass | %by mass | %by mass | %by mass |
| 1 | 83.1 | 3.3 | - | 6.6 | 2.7 | 4.3 | 16.9 |
| 2 | 83.0 | 3.4 | - | 6.6 | 2.7 | 4.3 | 17.0 |
| 3 | 82.8 | 3.6 | - | 6.6 | 2.45 | 4.55 | 17.2 |
| 4 | 82.8 | 3.6 | - | 6.6 | 2.5 | 4.5 | 17.2 |
| 5 | 85.7 | 3.6 | - | 3.7 | 2.7 | 4.3 | 14.3 |
| 6 | 85.5 | 3.6 | - | 3.9 | 2.7 | 4.3 | 14.5 |
| 7 | 84.6 | 3.6 | - | 6.6 | 2.7 | 2.5 | 15.4 |
| 8 | 84.5 | 3.6 | - | 6.6 | 2.7 | 2.6 | 15.5 |
| 9 | 82.8 | 3.6 | - | 6.6 | 2.7 | 4.3 | 17.2 |
| 10 | 81.2 | 3.6 | - | 6.6 | 2.7 | 5.9 | 18.8 |
| 11 | 81.1 | 3.6 | - | 6.6 | 2.7 | 6 | 18.9 |
| 12 | 80.1 | 3.6 | - | 9.3 | 2.7 | 4.3 | 19.9 |
| 13 | 80.0 | 3.6 | - | 9.4 | 2.7 | 4.3 | 20.0 |
| 14 | 82.8 | 3.6 | - | 6.6 | 3 | 4 | 17.2 |
| 15 | 82.8 | 3.6 | - | 6.6 | 3.1 | 3.9 | 17.2 |
| 16 | 82.5 | 3.9 | - | 6.6 | 2.7 | 4.3 | 17.5 |

(continued)

| Sample No. | First mixed powder | Second mixed powder | | | | | |
| | | Sodium oxide | Potassium oxide | Calcium carbonate | Magnesium aluminate | Aluminum oxide | Total amount |
| | %by mass | %by mass | %by mass | %by mass | %by mass | %by mass | %by mass |
| 17 | 82.2 | 4.2 | - | 6.6 | 2.7 | 4.3 | 17.8 |
| 18 | 82.1 | 4.3 | - | 6.6 | 2.7 | 4.3 | 17.9 |
| 19 | 83.1 | - | 3.3 | 6.6 | 2.7 | 4.3 | 16.9 |
| 20 | 82.8 | - | 3.6 | 6.6 | 2.7 | 4.3 | 17.2 |
| 21 | 82.8 | - | 3.6 | 6.6 | 2.45 | 4.55 | 17.2 |
| 22 | 82.8 | - | 3.6 | 6.6 | 2.5 | 4.5 | 17.2 |
| 23 | 85.7 | - | 3.6 | 3.7 | 2.7 | 4.3 | 14.3 |
| 24 | 85.5 | - | 3.6 | 3.9 | 2.7 | 4.3 | 14.5 |
| 25 | 84.6 | - | 3.6 | 6.6 | 2.7 | 2.5 | 15.4 |
| 26 | 84.5 | - | 3.6 | 6.6 | 2.7 | 2.6 | 15.5 |
| 27 | 82.8 | - | 3.6 | 6.6 | 2.7 | 4.3 | 17.2 |
| 28 | 81.2 | - | 3.6 | 6.6 | 2.7 | 5.9 | 18.8 |
| 29 | 81.1 | - | 3.6 | 6.6 | 2.7 | 6 | 18.9 |
| 30 | 80.1 | - | 3.6 | 9.3 | 2.7 | 4.3 | 19.9 |
| 31 | 80.0 | - | 3.6 | 9.4 | 2.7 | 4.3 | 20.0 |
| 32 | 82.8 | - | 3.6 | 6.6 | 3 | 4 | 17.2 |
| 33 | 82.8 | - | 3.6 | 6.6 | 3.1 | 3.9 | 17.2 |
| 34 | 82.5 | - | 3.9 | 6.6 | 2.7 | 4.3 | 17.5 |
| 35 | 82.2 | - | 4.2 | 6.6 | 2.7 | 4.3 | 17.8 |
| 36 | 82.1 | - | 4.3 | 6.6 | 2.7 | 4.3 | 17.9 |
| 37 | 79.8 | 1.7 | 1.7 | 6.6 | 2.7 | 4.3 | 20.2 |
| 38 | 78.0 | 2.1 | 2.1 | 6.6 | 2.7 | 4.3 | 22.0 |

[Table 2]

| Sample No. | $Na_2O$ (%by mass) | $K_2O$ (%by mass) | CaO (%by mass) | MgO (%by mass) | $Al_2O_3$ (%by mass) | Decrement in mass per unit area (mg/cm$^2$) | Thermal conductivity (W/(m·K)) | Four-point bending strength (MPa) |
| 1 | 0.1 | - | 3.7 | 0.3 | 7 | 0.32 | 29 | 680 |
| 2 | 0.2 | - | 3.7 | 0.3 | 7 | 0.29 | 28 | 740 |
| 3 | 0.4 | - | 3.7 | 0.05 | 7 | 0.26 | 29 | 720 |
| 4 | 0.4 | - | 3.7 | 0.1 | 7 | 0.24 | 28 | 740 |
| 5 | 0.4 | - | 2.1 | 0.3 | 7 | 0.28 | 29 | 720 |
| 6 | 0.4 | - | 2.2 | 0.3 | 7 | 0.24 | 28 | 740 |
| 7 | 0.4 | - | 3.7 | 0.3 | 5.2 | 0.23 | 29 | 720 |
| 8 | 0.4 | - | 3.7 | 0.3 | 5.3 | 0.23 | 28 | 740 |

(continued)

| Sample No. | Na$_2$O (%by mass) | K$_2$O (%by mass) | CaO (%by mass) | MgO (%by mass) | Al$_2$O$_3$ (%by mass) | Decrement in mass per unit area (mg/cm$^2$) | Thermal conductivity (W/(m·K)) | Four-point bending strength (MPa) |
|---|---|---|---|---|---|---|---|---|
| 9 | 0.4 | - | 3.7 | 0.3 | 7 | 0.23 | 26 | 750 |
| 10 | 0.4 | - | 3.7 | 0.3 | 8.6 | 0.23 | 24 | 770 |
| 11 | 0.4 | - | 3.7 | 0.3 | 8.7 | 0.23 | 21 | 780 |
| 12 | 0.4 | - | 5.2 | 0.3 | 7 | 0.15 | 24 | 770 |
| 13 | 0.4 | - | 5.3 | 0.3 | 7 | 0.12 | 21 | 720 |
| 14 | 0.4 | - | 3.7 | 0.6 | 7 | 0.22 | 23 | 770 |
| 15 | 0.4 | - | 3.7 | 0.7 | 7 | 0.2 | 21 | 780 |
| 16 | 0.7 | - | 3.7 | 0.3 | 7 | 0.22 | 23 | 760 |
| 17 | 1 | - | 3.7 | 0.3 | 7 | 0.2 | 21 | 770 |
| 18 | 1.1 | - | 3.7 | 0.3 | 7 | 0.2 | 18 | 780 |
| 19 | - | 0.1 | 3.7 | 0.3 | 7 | 0.32 | 29 | 680 |
| 20 | - | 0.2 | 3.7 | 0.3 | 7 | 0.29 | 28 | 740 |
| 21 | - | 0.4 | 3.7 | 0.05 | 7 | 0.26 | 29 | 720 |
| 22 | - | 0.4 | 3.7 | 0.1 | 7 | 0.24 | 28 | 740 |
| 23 | - | 0.4 | 2.1 | 0.3 | 7 | 0.28 | 29 | 720 |
| 24 | - | 0.4 | 2.2 | 0.3 | 7 | 0.24 | 28 | 740 |
| 25 | - | 0.4 | 3.7 | 0.3 | 5.2 | 0.23 | 29 | 720 |
| 26 | - | 0.4 | 3.7 | 0.3 | 5.3 | 0.23 | 28 | 740 |
| 27 | - | 0.4 | 3.7 | 0.3 | 7 | 0.23 | 26 | 750 |
| 28 | - | 0.4 | 3.7 | 0.3 | 8.6 | 0.23 | 24 | 770 |
| 29 | - | 0.4 | 3.7 | 0.3 | 8.7 | 0.23 | 21 | 780 |
| 30 | - | 0.4 | 5.2 | 0.3 | 7 | 0.15 | 23 | 770 |
| 31 | - | 0.4 | 5.3 | 0.3 | 7 | 0.12 | 21 | 780 |
| 32 | - | 0.4 | 3.7 | 0.6 | 7 | 0.22 | 23 | 770 |
| 33 | - | 0.4 | 3.7 | 0.7 | 7 | 0.2 | 21 | 780 |
| 34 | - | 0.7 | 3.7 | 0.3 | 7 | 0.22 | 23 | 760 |
| 35 | - | 1 | 3.7 | 0.3 | 7 | 0.2 | 21 | 770 |
| 36 | - | 1.1 | 3.7 | 0.3 | 7 | 0.2 | 18 | 780 |
| 37 | 0.1 | 0.1 | 3.7 | 0.3 | 7 | 0.29 | 28 | 740 |
| 38 | 0.5 | 0.5 | 3.7 | 0.3 | 7 | 0.2 | 21 | 770 |

In the following description, converted values shown in Table 2 are described as an amount. In Table 2, when comparing Sample Nos. 1, 2, 9, and 16 to 18 in which an amount of each of CaO, MgO, and Al$_2$O$_3$ was the same in each sample, and an amount of Na$_2$O was different in each sample, in Sample Nos. 2, 9, 16, and 17 in which the amount of Na$_2$O was 0.2% by mass or more and 1% by mass or less on the basis of the total mass, the decrement in mass per unit area was 0.29 mg/cm$^2$ or less, and thermal conductivity was 21 W/(m·K) or greater. Accordingly, it could be seen that high corrosion resistance to an alkali component and high thermal conductivity were provided.

In addition, when comparing Sample Nos. 19, 20, 27, and 34 to 36 in which the amount of each of CaO, MgO,

and $Al_2O_3$ was the same in each sample and the amount of $K_2O$ was different in each sample, in Sample Nos. 20, 27, 34, and 35 in which the amount of $K_2O$ was 0.2% by mass or more and 1% by mass or less on the basis of the total mass, the decrement in mass per unit area was 0.29 mg/cm$^2$ or less, and thermal conductivity was 21 W/(m·K) or greater. Accordingly, it could be seen that high corrosion resistance to an alkali component and high thermal conductivity were provided.

In addition, in Sample Nos. 37 and 38 which contained $Na_2O$ and $K_2O$, and in which the total amount of $Na_2O$ and $K_2O$ was 0.2% by mass or more and 1% by mass or less on the basis of the total mass, it could also be seen that high corrosion resistance to an alkali component and high thermal conductivity were provided.

In addition, when comparing Sample Nos. 5, 6, 9, 12, and 13 in which the amount of each of $Na_2O$, MgO, and $Al_2O_3$ was the same in each sample, and the amount of CaO was different in each sample, in Sample Nos. 6, 9, and 12 in which the amount of CaO was 2.2% by mass or more and 5.2% by mass or less on the basis of the total mass, the decrement in mass per unit area was 0.24 mg/cm$^2$ or less, thermal conductivity was 24 W/(m·K) or greater, and the four-point bending strength was 740 MPa or higher. Accordingly, it could be seen that high corrosion resistance to an alkali component and high thermal conductivity were provided, and mechanical characteristics were high and satisfactory.

In addition, when comparing Sample Nos. 23, 24, 27, 30, and 31 in which the amount of each of $K_2O$, MgO, and $Al_2O_3$ was the same in each sample, and the amount of CaO was different in each sample, in Sample Nos. 24, 27, and 30 in which the amount of CaO was 2.2% by mass or more and 5.2% by mass or less on the basis of the total mass, the decrement in mass per unit area was 0.24 mg/cm$^2$ or less, the thermal conductivity was 23 W/(m·K) or greater, and the four-point bending strength was 740 MPa or higher. Accordingly, it could be seen that high corrosion resistance to an alkali component and high thermal conductivity were provided, and the mechanical characteristics were high and satisfactory.

In addition, when comparing Sample Nos. 3, 4, 9, 14, and 15 in which the amount of each of $Na_2O$, CaO, and $Al_2O_3$ was the same in each sample, and the amount of MgO was different in each sample, it could be seen that characteristics of Sample Nos. 4, 9, and 14 were satisfactory. In addition, when comparing Sample Nos. 21, 22, 27, 32, and 33 in which the amount of each of $K_2O$, CaO, and $Al_2O_3$ was the same in each sample, and the amount of MgO was different in each sample, it could be seen that characteristics of Sample Nos. 22, 27, and 32 were satisfactory.

In addition, when comparing Sample Nos. 7 to 11 in which the amount of each of $Na_2O$, CaO, and MgO was the same in each sample, and the amount of $Al_2O_3$ was different in each sample, it could be seen that characteristics of Sample Nos. 8 to 10 were satisfactory. In addition, when comparing Sample Nos. 25 to 29 in which the amount of each of $K_2O$, CaO, and MgO was the same in each sample, and the amount of $Al_2O_3$ was different in each sample, it could be seen that characteristics of Sample Nos. 26 to 28 were satisfactory.

EXAMPLE 2

First, the first powder was prepared in the same manner as in EXAMPLE 1. Next, a sodium oxide powder, a calcium carbonate powder, a magnesium aluminate powder, and an aluminum oxide powder were prepared as the second powder. The first powder was weighed in an amount of 78.8% by mass, the sodium oxide powder was weighed in an amount of 3.6% by mass, the calcium carbonate powder was weighed in an amount of 11.3% by mass, the magnesium aluminate powder was weighed in an amount of 2.6% by mass, and the aluminum oxide powder was weighed in an amount of 3.7% by mass. The weighed powders were set as starting raw materials.

A ferric oxide powder having a specific surface area value shown in Table 3 was weighed in an amount of 1.4 parts by mass on the basis of 100 parts by mass of the starting raw materials, and then the ferric oxide powder was added to the slurry. In addition, other methods used until the molded body was prepared were the same as in example 1.

Next, the nitrification process was performed by the same method as in EXAMPLE 1, and a nitrogen pressure was set to a value shown in Table 3. The molded body was retained at 1775°C for 12 hours to perform firing. Then, cooling was performed at a cooling rate of 225°C/hour, thereby obtaining silicon nitride sintered body of Sample Nos. 39 to 50.

In addition, measurement and identification were performed with XRD with respect to the respective samples, and it was confirmed that a silicon nitride crystal existed and a crystal of iron silicate ($FeSi_2$) existed. In addition, it was confirmed that a plurality of sites in which an existence position of Fe and an existence position of Si overlapped each other existed through confirmation of mapping by using EPMA.

In addition, a magnification was set to 1000 times by using a scanning electron microscope to set a range in order for an area to be $10.8 \times 10^4$ $\mu$m$^2$ (a length in a horizontal direction was 127 $\mu$m, and a length in a vertical direction was 85.3 $\mu$m). In addition, a reflected electron image in this range was taken-in by using a CCD camera, and the number of iron silicate particles in the surface layer which had an equivalent circle diameter of 0.05 $\mu$m or more and 5 $\mu$m or less was obtained by performing particle analysis by using image analysis software "azokun" (registered trade mark, manufactured by Asahi Kasei Engineering Corporation). Here, with regard to setting conditions of the method, brightness was set to "light", a binarization method was set to "manual", and a threshold value that is an index indicating light and darkness of the reflected electron image was set to 1.6 times the peak value of a histogram indicating brightness of each point (each pixel) in the reflected electron image. The number of first compounds having an equivalent circle diameter of 0.05 $\mu$m or more and 5 $\mu$m or less per 1 mm$^2$ in the surface layer is shown in Table 3.

Next, a thermal shock test was performed with respect to each sample. Specifically, a test specimen having dimensions of a thickness of 3 mm from an outer periphery side of the sample, a length of 40 mm in an axial direction, and a length of 4 mm in a direction perpendicular to the axial line was cut out, and the test specimen was retained at 800°C, and then the test specimen immersed in water set to 20°C. Then, whether or not a crack was present in a surface layer of the test specimen after immersion was observed with a naked eye. In addition, a test specimen having the same size as described above was cut out, and the same test was performed in a state in which the retention temperature was set to 900°C. Results are shown in Table 3.

Next, an oxidation test was performed with respect to the sample. Specifically, the sample was retained in an atmospheric atmosphere at a temperature of 900°C for 200 hours, and then air cooling was performed. Then, the surface layer was observed with a naked eye. In Table 3, a sample in which the surface layer was discolored to red was described as red, and a sample in which discoloration was not confirmed in the surface layer was described as a straight line.

[Table 3]

| Sample No. | Specific surface area of ferric oxide powder (m$^2$/g) | Nitrogen pressure (kPa) | Number (pieces/mm$^2$) | Thermal shock resistant temperature | | Surface layer |
|---|---|---|---|---|---|---|
| | | | | 800°C | 900°C | |
| 39 | 0.4 | 160 | $1.0\times10^4$ | Occurred | Occurred | - |
| 40 | 0.5 | 152 | $2.0\times10^4$ | Did not occur | Occurred | - |
| 41 | 0.5 | 127 | $3.2\times10^4$ | Did not occur | Occurred | - |
| 42 | 8 | 127 | $4.3\times10^4$ | Did not occur | Occurred | - |
| 43 | 15 | 127 | $5.1\times10^4$ | Did not occur | Did not occur | - |
| 44 | 22 | 127 | $6.3\times10^4$ | Did not occur | Did not occur | - |
| 45 | 29 | 127 | $7.1\times10^4$ | Did not occur | Did not occur | - |
| 46 | 36 | 127 | $8.2\times10^4$ | Did not occur | Did not occur | - |
| 47 | 43 | 127 | $9.2\times10^4$ | Did not occur | Did not occur | - |
| 48 | 50 | 127 | $1.0\times10^5$ | Did not occur | Did not occur | - |
| 49 | 50 | 106 | $2.0\times10^5$ | Did not occur | Did not occur | - |
| 50 | 57 | 101 | $2.8\times10^5$ | Did not occur | Did not occur | Red |

As shown in Table 3, in Sample Nos. 40 to 49, the first compounds including iron and silicon scatter in the surface layer, and the number of compounds having an equivalent circle diameter of 0.05 $\mu$m or more and 5 $\mu$m or less was $2.0\times10^4$ pieces or more and $2.0\times10^5$ pieces or less per 1 mm$^2$. Accordingly, a crack did not occur during a thermal shock resistance test at 800°C, and it could be seen that thermal shock resistance was good. In addition, from the results of the oxidization test, it could be seen that in Sample Nos. 40 to 49, discoloration was not confirmed, and the discoloration could be suppressed.

In addition, when the number of the first compounds having an equivalent circle diameter of 0.05 $\mu$m or more and 5 $\mu$m or less was $5.1\times10^4$ pieces or more and $2.0\times10^5$ pieces or less per 1 mm$^2$, it could be seen that a crack did not occur during the thermal shock resistance test at 900°C, and the thermal shock resistance was good.

EXAMPLE 3

Processes up to the nitrification process were performed by the same method as in EXAMPLE 2 except that the powder added to the slurry was set to a tungsten oxide powder instead of the ferric oxide powder, and the nitrogen pressure was set to a value shown in Table 4. Then, retention was performed at 1775°C for 12 hours to perform firing. Then, cooling was performed at a cooling rate of 225°C/hour, thereby obtaining silicon nitride sintered body of Sample Nos. 51 to 62.

In addition, from measurement and identification with XRD with respect to respective samples, it was confirmed that a silicon nitride crystal existed and a tungsten silicide ($W_5Si_3$) crystal existed. In addition, it was confirmed that a plurality of sites in which an existence position of W and an existence position of Si overlapped each other existed through confirmation of mapping by using EPMA.

In addition, the number of second compounds having an equivalent circle diameter of 0.05 $\mu$m or more and 5 $\mu$m or less per 1 mm$^2$ in the surface layer was obtained by the same method as in EXAMPLE 2. In addition, only a peak value of a histogram was set to 1.7 times. Results are shown in Table 4.

In addition, 10 test specimens conforming to JIS R 1601-2008 were cut out from each sample, and then the four-point bending strength at room temperature was measured. In addition, a color tone of a surface of each sample was measured in accordance with JIS Z 8722-2000 by using a color difference meter (CM-3700A, manufactured by KONICA MINOLTA HOLDINGS, INC.) in a state in which a light source was set to CIE standard light source D65, a visual field angle was set to 10°, and a measurement range was set to 3 mmx5 mm. Measured values of psychometric lightness L* and psychometric chroma coordinates a* and b* are shown in Table 4.

[Table 4]

| Sample No. | Specific surface area of tungsten oxide (m$^2$/g) | Nitrogen pressure (kPa) | Number (pieces/mm$^2$) | Four-point bending strength (MPa) | Psychometric lightness L* | Psychometric chroma coordinates | |
|---|---|---|---|---|---|---|---|
| | | | | | | a* | b* |
| 51 | 0.4 | 158 | 1.0×10$^4$ | 722 | 36.3 | 0.1 | -0.7 |
| 52 | 0.5 | 152 | 2.0×10$^4$ | 720 | 36 | 0.05 | -0.48 |
| 53 | 0.5 | 130 | 3.3×10$^4$ | 718 | 35.8 | 0.01 | -0.31 |
| 54 | 9 | 130 | 4.2×10$^4$ | 717 | 35.7 | 0.04 | -0.51 |
| 55 | 16 | 130 | 5.0×10$^4$ | 717 | 35.6 | 0.1 | -0.67 |
| 56 | 21 | 130 | 6.2×10$^4$ | 716 | 35.5 | 0.08 | -0.66 |
| 57 | 30 | 130 | 7.0×10$^4$ | 715 | 35.4 | 0.05 | -0.48 |
| 58 | 35 | 130 | 8.1×10$^4$ | 714 | 35.3 | 0.01 | -0.3 |
| 59 | 44 | 130 | 9.3×10$^4$ | 712 | 35.3 | 0.07 | -0.51 |
| 60 | 50 | 130 | 1.0×10$^5$ | 711 | 35.2 | 0.09 | -0.56 |
| 61 | 50 | 106 | 2.0×10$^5$ | 710 | 35 | 0.06 | -0.51 |
| 62 | 57 | 100 | 2.8×10$^5$ | 700 | 34.8 | 0.1 | -0.7 |

As shown in Table 4, in Sample Nos. 52 to 61, the second compounds including tungsten and silicon scattered in the surface layer, and the number of second compounds having an equivalent circle diameter of 0.05 $\mu$m or more and 5 $\mu$m or less was 2.0×10$^4$ pieces or more and 2.0×10$^5$ pieces or less per 1 mm$^2$. Accordingly, the value of psychometric lightness L* was small, and thus brightness of the surface of the silicon nitride sintered body exhibited a low-brightness color. In addition, color unevenness did not tend to occur, and the mechanical strength was high. Accordingly, it could be seen that even when mechanical stress was applied, an occurrence of a crack could be suppressed.

EXAMPLE 4

Samples were prepared while changing conditions during placement of a molded body in the sagger, and then comparison of thermal conductivity was performed. First, Sample No. 63 that is the same as Sample No. 6 was prepared according to the method described in EXAMPLE 1. In contrast, a gas supply tube was disposed on an inner peripheral surface side of the molded body, and the nitrification process and the firing process were performed while supplying nitrogen from the gas supply tube so as to suppress vaporization of the magnesium oxide from an inner peripheral surface side during placement of the molded body in the sagger configured of the silicon carbide sintered body, thereby preparing a silicon nitride sintered body of Sample No. 64. In addition, a composition and a manufacturing method of Sample No. 64 were the same as those of Sample No. 63 except that the conditions during placement of the molded body in the sagger were changed.

In addition, magnesium color mapping using EPMA was performed with respect to each cross-section of Sample Nos. 63 and 64, and the magnitude of the characteristic X-ray intensity was confirmed by a color tone. From the confirmation, it could be seen that in Sample No. 63, a difference in the magnitude of the characteristic X-ray intensity of magnesium was not found, and in Sample No. 64, the first region was formed on an inner peripheral surface side, and the second region was formed on an outer peripheral surface side.

In addition, a heater was disposed on an inner peripheral surface side of each sample, and then the sample was immersed in a container filled with 10 liters of water retained at a temperature of 5°C. Then, time taken for the water to reach 100°C by turning on the heater was measured. As a result, it could be seen that the time taken for the water to reach 100°C was faster on a Sample No. 64 side.

According to the result, it could be seen that when the first region was located on a heat source side, that is, the first region was exposed, heat of the heat source could be efficiently conducted.

EXAMPLE 5

Samples were prepared while changing the conditions during placement of the molded body in the sagger, and then comparison of four-point bending strength was performed. First, Sample No. 65 that is the same as Sample No. 64 was prepared according to the method described in EXAMPLE 4. In contrast, after placing a molded body in the sagger configured of the silicon carbide sintered body, as an atmosphere adjusting agent, an aluminum oxide powder having a particle size of F16 defined in JIS R 6001-1998 was spread at a position on an outer side so as not to come into contact with the molded body on a bottom plate of the sagger, and then a silicon nitride sintered body of Sample No. 66 was prepared. In addition, a composition and a manufacturing method of Sample No. 66 were the same as those of Sample No. 65 except that the atmosphere adjusting agent was used.

In addition, aluminum color mapping using EPMA was performed with respect to each cross-section of Sample Nos. 65 and 66, and the magnitude of the characteristic X-ray intensity was confirmed by a color tone. From the confirmation, it could be seen that in Sample No. 65, a difference in the magnitude of the characteristic X-ray intensity of aluminum was not found and the third region and the fourth region were not formed, and in Sample No. 66, the third region was formed on an outer peripheral surface side in the second region, and the fourth region was formed on an inner peripheral surface side in the second region.

In addition, a test specimen conforming to JIS R 1601-2008 was cut out from the third region of Sample No. 66. In addition, in Sample No. 65, a test specimen was cut out from a portion at the same position as that of the third region of Sample No. 66. In addition, the four-point bending strength of the test specimens of Sample Nos. 65 and 66 was measured in the same manner as in EXAMPLE 1.

As a result, the four-point bending strength value of Sample No. 66 was high. From this result, it could be seen that since the third region was exposed, the mechanical strength was high, and thus it is possible to reduce breakage caused by impact due to contact and the like during handling.

Reference Signs List

1: First region
2: Second region
10: Structure
11: Heat conduction member
20: Heat conduction device

**Claims**

1. A silicon nitride sintered body, comprising:

   a silicon nitride crystal; and
   a grain boundary phase including at least any of sodium oxide and potassium oxide,
   wherein a total amount of the sodium oxide and the potassium oxide is 0.2% by mass or more and 1% by mass or less in terms of $Na_2O$ and $K_2O$ on the basis of the total mass.

2. The silicon nitride sintered body according to Claim 1,
   wherein calcium oxide is included in the grain boundary phase, and
   an amount of the calcium oxide is 2.2% by mass or more and 5.2% by mass or less in terms of CaO on the basis of the total mass.

**3.** The silicon nitride sintered body according to Claim 1 or 2,
wherein magnesium oxide is included in the grain boundary phase, and
an amount of the magnesium oxide is 0.1% by mass or more and 0.6% by mass or less in terms of MgO on the basis of the total mass.

**4.** The silicon nitride sintered body according to any one of Claims 1 to 3,
wherein aluminum oxide is included in the grain boundary phase, and
an amount of the aluminum oxide is 5.3% by mass or more and 8.6% by mass or less in terms of $Al_2O_3$ on the basis of the total mass.

**5.** The silicon nitride sintered body according to Claim 4,
wherein gehlenite is included in the grain boundary phase.

**6.** The silicon nitride sintered body according to any one of Claims 1 to 5,
wherein first compounds, which include iron and silicon, scatter in a surface layer, and
a number of the first compounds having an equivalent circle diameter of 0.05 $\mu$m or more and 5 $\mu$m or less is $2.0 \times 10^4$ pieces or more and $2.0 \times 10^5$ pieces or less per 1 mm$^2$.

**7.** The silicon nitride sintered body according to any one of Claims 1 to 6,
wherein second compounds, which include tungsten and silicon, scatter in a surface layer, and
a number of the second compounds having an equivalent circle diameter of 0.05 $\mu$m or more and 5 $\mu$m or less is $2.0 \times 10^4$ pieces or more and $2.0 \times 10^5$ pieces or less per 1 mm$^2$.

**8.** The silicon nitride sintered body according to Claim 1,
wherein magnesium oxide is included in the grain boundary phase,
a first region in which a characteristic X-ray intensity of magnesium is relatively large, and a second region in which the characteristic X-ray intensity of magnesium is relatively small are provided, and
at least the first region is exposed.

**9.** The silicon nitride sintered body according to Claim 8,
wherein aluminum oxide is included in the grain boundary phase,
the second region includes a third region in which a characteristic X-ray intensity of aluminum is relatively large, and a fourth region in which the characteristic X-ray intensity of aluminum is relatively small, and
the third region is exposed.

**10.** A heat conduction member, comprising:

the silicon nitride sintered body according to Claim 8 or 9; and
a heat source,
wherein the heat source is disposed on the first region side.

Fig1

（a）

x    x'

10

（b）

10    1    2

Fig2

## INTERNATIONAL SEARCH REPORT

| | International application No. |
|---|---|
| | PCT/JP2013/071840 |

A. CLASSIFICATION OF SUBJECT MATTER
*C04B35/584*(2006.01)i

According to International Patent Classification (IPC) or to both national classification and IPC

B. FIELDS SEARCHED

Minimum documentation searched (classification system followed by classification symbols)
C04B35/584

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 59-146983 A  (Toshiba Tungaloy Co., Ltd.),<br>23 August 1984 (23.08.1984),<br>claims; table 1, sample no.8, 16<br>(Family: none) | 1<br>2,5 |
| X<br>Y | JP 2-271982 A  (Hitachi Metals, Ltd.),<br>06 November 1990 (06.11.1990),<br>claims; page 3, upper right column, lines 1 to 3; page 1, lower right column, lines 14 to 17; page 4, upper right column, line 13 to lower left column, line 1<br>(Family: none) | 1,3,4,8-10<br>2,5-7 |
| Y | JP 2012-92006 A  (Kyocera Corp.),<br>17 May 2012 (17.05.2012),<br>claims; paragraphs [0042], [0050]<br>(Family: none) | 6,7 |

| [×] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 October, 2013 (21.10.13) | Date of mailing of the international search report<br>29 October, 2013 (29.10.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/071840

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2002-316875 A  (NGK Spark Plug Co., Ltd.),<br>31 October 2002 (31.10.2002),<br>claims; table 1, example 3<br>(Family: none) | 1 |
| X | JP 50-27852 B1  (Toshiba Ceramics Co., Ltd.),<br>10 September 1975 (10.09.1975),<br>claims; tables 1, 3, example 2<br>(Family: none) | 1 |
| X | JP 1-157466 A  (NGK Spark Plug Co., Ltd.),<br>20 June 1989 (20.06.1989),<br>claims; table 2, sample no.12<br>& US 4880756 A          & EP 306001 A2<br>& DE 3875879 A          & CA 1314293 A | 1 |
| A | JP 7-187793 A  (Toshiba Corp.),<br>25 July 1995 (25.07.1995),<br>claims; paragraph [0023]<br>& US 5698896 A          & EP 660397 A2<br>& DE 69423447 T | 1-10 |
| A | JP 4-77365 A  (NGK Insulators, Ltd.),<br>11 March 1992 (11.03.1992),<br>claims<br>(Family: none) | 1-10 |
| A | JP 2-271966 A  (Mitsubishi Metal Corp.),<br>06 November 1990 (06.11.1990),<br>claims; page 2, upper left column, lines 4 to 10<br>(Family: none) | 1-10 |

Form PCT/ISA/210 (continuation of second sheet) (July 2009)

**EP 2 883 854 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5036464 A